# DEMANDE DE BREVET EUROPEEN

(11) **EP 4 789 919 A1**
(43) Date de publication de la demande: **12.08.2026**
(21) Numéro de dépôt: 25224883.6
(22) Date de dépôt: 18.12.2025
(51) Int. Cl.: B60Q 1/04, B62D 65/16

(54) **ARRANGEMENT DE FAÇADE POUR VÉHICULE AUTOMOBILE**

(30) Priorité: 06.02.2025 FR 2501226
(71) Demandeur: Stellantis Auto SAS, 78300 Poissy (FR)
(72) Inventeur: BOUDAN, Julien, 91210 DRAVEIL (FR); PERON, Rodolphe, 95220 HERBLAY (FR)
(74) Mandataire: BCIP

(57) **Abrégé**

[L'invention concerne un arrangement de façade (1) pour véhicule automobile, l'ensemble de façade comportant un projecteur (11) comportant un boitier (112) logeant une source lumineuse et une optique de mise en forme de rayons lumineux produits par la source lumineuse, le projecteur (11) comportant des dispositifs de fixation (111A, 11B, 111C) qui s'étendent en saillie depuis le boitier (112) et permettant son montage à une structure de caisse du véhicule automobile en trois points différents. Selon l'invention, le boitier (112) comporte un quatrième point de fixation formé par un organe de maintien (113) configuré pour collaborer par engagement de formes complémentaires avec un élément de maintien complémentaire (120) solidaire d'un support d'aile avant (12) du véhicule automobile.

## Description

Le contexte technique de la présente invention est celui des interfaces de fixation d'un projecteur sur une structure de caisse d'un véhicule automobile, c'est-à-dire l'assemblage mécanique d'un module de phare avant ou d'un phare arrière sur les éléments structurels d'un véhicule automobile. Plus particulièrement, l'invention a trait à un arrangement de façade pour véhicule automobile.

Dans l'état de la technique, on connait des projecteurs de véhicules automobiles comportant notamment une source lumineuse et une optique de mise en forme des rayons lumineux générés par la source lumineuse. Ces éléments optiques sont enfermés dans un boitier afin de les protéger et de former un module facilement montable sur le véhicule automobile.

De manière connue, un tel boitier comporte des pièces d'interface avec un élément du véhicule, typiquement, une aile latérale du véhicule automobile et une armature de parechocs. Ces pièces d'interface sont généralement réalisées sous la forme de languettes élastiquement déformables et/ou sous la forme de pattes de fixation qui sont ensuite assemblée, typiquement par vissage, sur les éléments situés en regard du véhicule automobile. Plus particulièrement, les projecteurs connus sont généralement fixés au véhicule automobile par les éléments d'interface suivants :
- un premier dispositif de fixation d'un bord supérieur du boitier du projecteur à une armature supérieure de parechocs du véhicule automobile ;
- un deuxième dispositif de fixation d'un bord inférieur du boitier du projecteur à une armature inférieure de parechocs du véhicule automobile ;
- un troisième dispositif de fixation d'un bord latéral supérieur du boitier du projecteur à une aile latérale avant du véhicule automobile.

Ainsi, les projecteurs connus sont fixés en trois points à la structure de caisse du véhicule automobile. Or, les projecteurs modernes étant de plus en plus imposants, notamment du fait des technologies embarquées dans les boitiers, une fixation en trois points devient insuffisante et ne permet pas de maintenir suffisamment de tels projecteurs. En particulier, une fixation en trois points conduit à de vibrations au niveau du projecteur durant certaines phases de roulage du véhicule automobile ; et une telle fixation en trois points ne permet pas non plus de maîtriser convenablement les jeux d'assemblage.

La présente invention a pour objet de proposer un nouvel arrangement de façade afin de répondre au moins en grande partie aux problèmes précédents et de conduire en outre à d'autres avantages.

Un autre but de l'invention est d'améliorer le maintien du projecteur sur le véhicule automobile.

Un autre but de l'invention est de répondre aux exigences de montage, en termes de jeux latéraux notamment.

Un autre but de l'invention est de ne pas complexifier le montage du projecteur.

Selon un premier aspect de l'invention, on atteint au moins l'un des objectifs précités avec un arrangement de façade pour véhicule automobile, l'ensemble de façade comportant :
- une armature supérieure de parechocs destinée à supporter une partie supérieure d'un pare-chocs avant du véhicule automobile ;
- une armature inférieure de parechocs destinée à supporter une partie inférieure du pare-chocs avant ;
- un support d'aile avant qui s'étend depuis un bord latéral de l'armature supérieure de parechocs et/ou de l'armature inférieure de parechocs ;
- une aile latérale avant solidaire du support d'aile avant et formant un élément de carrosserie du véhicule automobile ;
- un projecteur comportant une source lumineuse et une optique de mise en forme de rayons lumineux produits par la source lumineuse, le projecteur comportant des dispositifs de fixation à l'armature supérieure de parechocs, à l'armature inférieure de parechocs et à l'aile latérale avant.

Dans l'arrangement de façade selon l'invention, le projecteur comporte un organe de maintien configuré pour collaborer par engagement de formes complémentaires avec un élément de maintien complémentaire du support d'aile avant.

Dans le contexte de la présente invention, un axe longitudinal, un axe latéral et un axe vertical sont définis relativement au véhicule automobile sur lequel l'arrangement de façade conforme au premier aspect de l'invention est destiné à être monté. Plus particulièrement, l'axe transversal s'entend comme une direction prise entre un côté latéral du véhicule automobile et un côté latéral opposé dudit véhicule automobile. En d'autres termes, l'axe transversal s'entend selon une direction qui s'étend depuis un côté passager du véhicule automobile vers un côté conducteur dudit véhicule automobile, ou réciproquement. Les adjectifs latéraux, intérieur et extérieur font référence à un tel axe transversal. En outre, l'axe longitudinal s'entend comme étant pris le long d'une direction qui s'étend d'avant en arrière ou d'arrière en avant du véhicule automobile. L'axe longitudinal est perpendiculaire à l'axe transversal. Les adjectifs frontaux, avant et arrière font référence à cet axe longitudinal. Enfin, l'axe vertical s'entend comme étant pris le long d'un axe qui s'étend depuis les roues du véhicule automobile et vers le pavillon de toit dudit véhicule automobile, ou inversement, l'axe vertical étant simultanément perpendiculaire à l'axe transversal et à l'axe longitudinal. Les adjectifs dessus et dessous, ou inférieur et supérieur font référence à cet axe vertical.

Dans le contexte de la présente invention, une façade du véhicule automobile est soit une face avant, le projecteur associé étant alors du type d'un phare avant et/ou d'un feu de signalisation avant, ou une face arrière, le projecteur associé étant alors du type d'un phare arrière et/ou d'un feu de signalisation arrière.

Dans le contexte de la présente invention, une armature supérieure de parechocs forme une pièce d'interface pour un parechocs - avant ou arrière - du véhicule automobile. L'armature supérieure de parechocs est solidaire d'une structure de caisse du véhicule automobile et permet de fixer une partie supérieure du pare chocs.

Dans le contexte de la présente invention, une armature inférieure de parechocs forme une pièce d'interface pour un parechocs - avant ou arrière - du véhicule automobile. L'armature inférieure de parechocs est solidaire d'une structure de caisse du véhicule automobile et permet de fixer une partie inférieure du pare chocs.

Dans le contexte de la présente invention, une aile latérale habille classiquement une zone latérale droite ou gauche d'extrémité longitudinale du véhicule automobile, en étant fixée à l'un des éléments de châssis du véhicule automobile en une pluralité de points d'attache. L'aile latérale comporte un bord arqué configuré pour accoster contre un bord de caisse en vue de délimiter le passage de roue du côté latéral extérieur du véhicule automobile. L'aile latérale est ainsi fixée au bord de caisse par l'intermédiaire de son bord d'accostage et comporte un dégagement délimité au moins en partie par son bord arqué pour ménager un accès au volume du passage de roue et au garde-boue depuis le côté latéral extérieur du véhicule automobile.

Dans le contexte de la présente invention, un support d'aile avant forme une pièce d'interface pour une partie frontale de l'aile latérale du véhicule automobile. Le support d'aile avant est solidaire d'une structure de caisse du véhicule automobile et permet de fixer l'aile latérale.

Dans le contexte de la présente invention, un projecteur est un module optique comportant un boitier qui loge une source lumineuse et une optique de mise en forme des rayons lumineux générés par la source lumineuse. Le projecteur peut être du type d'un phare avant configuré pour produire un faisceau d'éclairage de type « feux de route » ou « feux de croisement », ou d'un phare arrière, d'un feu de signalisation, d'un feu stop... Le projecteur comporte plusieurs dispositifs de fixation qui s'étendent en saillie depuis le boitier.

Dans le contexte de la présente invention, un dispositif de fixation forme une interface de montage du boitier du projecteur sur une pièce située en regard du véhicule automobile et formant une partie d'une structure de caisse du véhicule automobile. Typiquement, un dispositif de fixation forme une patte de fixation qui s'étend en saillie depuis le boitier et qui comporte un trou de passage d'une vis de fixation destinée à collaborer avec un taraudage aménagé sur la partie de structure de caisse située en regard. Ainsi, le boitier est fixé solidairement à la structure de caisse, au travers des armatures de parechocs et de l'aile latérale, de manière pérenne et fiable.

Dans le contexte de la présente invention, un organe de maintien permet de solidariser le boitier à la structure de caisse du véhicule automobile, de manière analogue à un dispositif de fixation. Cependant, de manière astucieuse, l'organe de maintien collabore avec une autre partie de la structure de caisse du véhicule automobile qui n'était pas exploitée jusque-là pour la fixation du boitier, à savoir le support d'aile avant. L'organe de maintien s'étend en saillie depuis le boitier du projecteur et en direction du support d'aile avant, et en particulier de son élément de maintien complémentaire. Dans le contexte de la présente invention, l'organe de maintien et l'élément de maintien complémentaire collaborent ensemble pour supporter le boitier au niveau d'une zone de support qui n'était pas soutenue jusque-là, par exemple un bord inférieur et arrière du boitier. De manière avantageuse, l'organe de maintien et l'élément de maintien complémentaire ne collaborent pas ensemble par une fixation vissée comme c'est le cas pour les dispositifs de fixation. Préférentiellement, l'organe de maintien et l'élément de maintien complémentaire collaborent ensemble par engagement de forme complémentaire au travers d'une liaison spontanée ou automatique qui ne nécessite pas d'autre intervention que leur seul interfaçage, c'est-à-dire leur rapprochement ou leur emboitement par exemple.

Ainsi, l'arrangement de face avant conforme au premier aspect de l'invention résout le problème technique en ce qu'il permet de renforcer le montage et la fixation du boitier d'un projecteur sur une structure de caisse du véhicule automobile, en proposant une interface de liaison supplémentaire. En outre, la nature de la liaison proposée par l'organe de maintien et son élément de maintien complémentaire permet de ne pas complexifier le montage du boitier sur le véhicule automobile, facilitant ainsi les opérations de montage. La liaison entre l'organe de maintien et son élément de maintien complémentaire est préférentiellement réversible, c'est-à-dire démontable afin de faciliter les opérations de maintenance.

L'arrangement de face avant conforme au premier aspect de l'invention comprend avantageusement au moins un des perfectionnements ci-dessous, les caractéristiques techniques formant ces perfectionnements pouvant être prises seules ou en combinaison :
- l'organe de maintien du projecteur et l'élément de maintien complémentaire du support d'aile avant sont configurés pour s'accoupler l'un à l'autre par encliquetage. Cette configuration avantageuse permet d'assurer un montage simplifié, surtout au regard de la redondance des interfaces de liaison avec la structure de caisse du véhicule automobile ;
- l'organe de maintien du projecteur et l'élément de maintien complémentaire du support d'aile avant sont configurés pour assurer un maintien du projecteur sur le support d'aile suivant un axe vertical de l'arrangement de façade. En particulier, l'organe de maintien n'est pas nécessairement un organe de fixation, liant totalement le boitier au support d'aile avant. A contrario, l'organe de maintien et l'élément de maintien complémentaire collaborent ensemble pour, à tout le moins, proposer une reprise suivant l'axe vertical des efforts de gravité exercés par le boitier au niveau de du support d'aile avant ;
- l'organe de maintien s'étend depuis un bord latéral inférieur du projecteur. L'organe de maintien s'étend en regard d'un bord avant du support d'aile avant. l'organe de maintien est situé d'un côté extérieur du boitier, relativement à l'axe transversal. De manière préférée, l'organe de maintien s'étend en partie basse du projecteur afin d'assurer une continuité de jeu entre le parechocs et l'aile latérale une fois assemblés ;
- l'organe de maintien comporte une protrusion formant une cavité creuse configurée pour recevoir au moins en partie l'élément de maintien complémentaire du support d'aile avant. Cette configuration avantageuse autorise un montage simplifié, par engagement de l'élément de maintien complémentaire dans la cavité, par translation. Cette translation permet ainsi de guider l'opérateur durant les opérations d'assemblage ;
- la cavité creuse est délimitée par des faces périphériques délimitant une cavité de forme polygonale. D'une manière générale, la cavité délimitée par les faces périphériques est asymétrique afin de garantir un guidage lors du montage et un bon contrôle des jeux latéraux. En outre, cette configuration asymétrique de la cavité permet de bloquer l'élément de maintien complémentaire une fois engagé avec l'organe de maintien. En particulier, la cavité creuse est délimitée par un contour fermé afin de bien indexer le support d'aile avant ;
- une première face périphérique comporte des nervures qui s'étendent transversalement ou longitudinalement par rapport à une direction d'élongation de la cavité. De préférence, les nervures s'étendent depuis une ouverture d'entrée de la cavité et en direction d'une paroi de fond de ladite cavité. Cette configuration avantageuse permet de faciliter l'insertion de l'élément de maintien complémentaire et de mieux le bloquer dans la cavité formant l'organe de maintien ;
- une deuxième face périphérique comporte une zone élastiquement déformable et formant une zone de clippage, ladite zone de clippage étant configurée pour générer un effort de retenue sur l'élément de maintien complémentaire dans la cavité. Cette configuration avantageuse permet de bloquer l'élément de maintien complémentaire dans la cavité formant l'organe de maintien. La zone élastiquement déformable comporte une lèvre pliée en direction de l'intérieur de la cavité creuse. La zone élastiquement déformable est obtenue par découpage de la lèvre pliée à partir de la deuxième face périphérique de la cavité. La lèvre pliée présente ainsi un profil en « V » orienté vers l'intérieur de la cavité creuse, de sorte à générer un effort vers l'intérieur de la cavité creuse lorsque l'élément de maintien complémentaire est engagé dans ladite cavité. Dans ce cas, l'élément de maintien appui sur la lèvre pliée qui tend à se déformer en direction de la deuxième face périphérique depuis laquelle elle est formée. En retour, la lèvre pliée exerce sur l'élément de maintien complémentaire un effort orienté vers l'intérieur de la cavité et qui tend à plaquer l'élément de maintien complémentaire contre la première face périphérique. Ainsi, cette configuration avantageuse permet de bien maintenir le boitier contre le support d'aile avant ;
- l'effort de retenue généré par la zone de clippage sur l'élément de maintien complémentaire est orienté vers le haut et majoritairement suivant l'axe vertical ;
- la deuxième face périphérique est située en regard de la première face périphérique ;
- les nervures de la première face périphérique s'étendent en regard de la zone de clippage de la deuxième face périphérique. Cette configuration avantageuse permet de renforcer la première face périphérique au niveau de laquelle l'élément de maintien complémentaire est mis en appui par la zone de clippage ;
- l'organe de maintien est issu de matière avec le projecteur. Dans le contexte de la présente invention, par "issu de matière", on comprend que l'organe de maintien et le boitier du projecteur sont issus d'un même procédé de fabrication et qu'ils ne peuvent être détachés l'un de l'autre sans que l'un et/ou l'autre ne soit entièrement ou partiellement détérioré ou détruit. Alternativement, l'organe de maintien est rapporté sur le projecteur et fixé solidairement à lui par tout moyen ;
- la cavité creuse est orientée majoritairement suivant un axe longitudinal de l'arrangement de façade. Cette configuration avantageuse permet de mettre en œuvre une cinématique simplifiée pour le montage du projecteur sur la structure de caisse du véhicule automobile ;
- l'élément de maintien complémentaire s'étend depuis une partie inférieure d'un bord avant du support d'aile avant. Cette configuration avantageuse permet de supporter une partie inférieure du boitier du projecteur ;
- l'élément de maintien complémentaire comporte une portée configurée pour pouvoir être engagée dans la cavité formant l'organe de maintien. Plus généralement, la portée de l'élément de maintien complémentaire est conforme pour s'engager dans la cavité sans jeu ou avec un jeu latéral minimal. Par jeu latéral, on comprend un jeu mesuré suivant l'axe vertical et/ou suivant l'axe transversal. Par minimal, on comprend que, une fois monté dans l'organe de maintien, l'élément de fixation est solidaire dudit organe de maintien avec un jeu latéral inférieur à 100 µm par exemple ;
- l'élément de maintien complémentaire est issu de matière avec le support d'aile avant. Dans le contexte de la présente invention, par "issu de matière", on comprend que l'élément de maintien complémentaire et le support d'aile avant sont issus d'un même procédé de fabrication et qu'ils ne peuvent être détachés l'un de l'autre sans que l'un et/ou l'autre ne soit entièrement ou partiellement détérioré ou détruit. Alternativement, l'élément de maintien complémentaire est rapporté sur le support d'aile avant.

Selon un deuxième aspect de l'invention, il est proposé un véhicule automobile comportant un arrangement de façade conforme au premier aspect de l'invention ou selon l'un quelconque de ses perfectionnements.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre une vue éclatée d'un exemple de réalisation d'un arrangement de façade conforme au premier aspect de l'invention ;
[Fig.2] illustre une vue tridimensionnelle de l'arrangement de façade illustré sur la FIGURE 1 ;
[Fig.3] illustre une vue de détail et depuis l'arrière de l'organe de maintien du boitier du projecteur de l'arrangement de façade de la FIGURE 1 ;
[Fig.4] illustre une vue de détail et de côté de l'arrangement de façade illustré sur la FIGURE 1 et en cours d'assemblage ;
[Fig.5] illustre une première vue en coupe et de détail de la collaboration entre l'organe de maintien et l'élément de maintien complémentaire de l'arrangement de façade illustré sur la FIGURE 1 lorsque celui-ci est assemblé ;
[Fig.6] illustre une deuxième vue en coupe et de détail de la collaboration entre l'organe de maintien et l'élément de maintien complémentaire de l'arrangement de façade illustré sur la FIGURE 1 lorsque celui-ci est assemblé.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

Dans les FIGURES décrites ci-après, on définit un axe longitudinal X, un axe latéral et un axe vertical Z relativement au véhicule automobile sur lequel l'arrangement de façade 1 selon l'invention est destiné à être monté.

Plus particulièrement, l'axe transversal Y s'entend comme une direction prise entre un côté latéral du véhicule automobile et un côté latéral opposé dudit véhicule automobile. En d'autres termes, l'axe transversal Y s'entend selon une direction qui s'étend depuis un côté passager du véhicule automobile vers un côté conducteur dudit véhicule automobile, ou réciproquement. Les adjectifs latéraux, intérieur et extérieur font référence à un tel axe transversal Y.

En outre, l'axe longitudinal X s'entend comme étant pris le long d'une direction qui s'étend d'avant en arrière ou d'arrière en avant du véhicule automobile. L'axe longitudinal X est perpendiculaire à l'axe transversal Y. Les adjectifs frontaux, avant et arrière font référence à cet axe longitudinal X.

Enfin, l'axe vertical Z s'entend comme étant pris le long d'un axe qui s'étend depuis les roues du véhicule automobile et vers le pavillon de toit dudit véhicule automobile, ou inversement, l'axe vertical Z étant simultanément perpendiculaire à l'axe transversal Y et à l'axe longitudinal X. Les adjectifs dessus et dessous, ou inférieur et supérieur font référence à cet axe vertical Z.

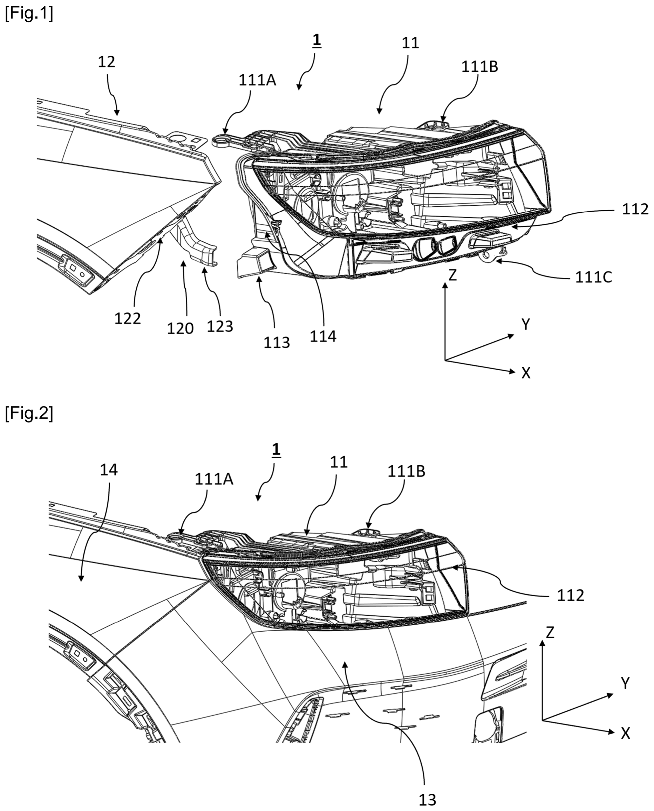

En référence aux FIGURES 1 à 6, l'invention adresse un arrangement de façade 1 pour véhicule automobile, l'ensemble de façade comportant :
- une armature supérieure de parechocs destinée à supporter une partie supérieure d'un pare chocs avant du véhicule automobile ;
- une armature inférieure de parechocs destinée à supporter une partie inférieure du pare chocs avant ;
- un support d'aile avant 12 qui s'étend depuis un bord latéral de l'armature supérieure de parechocs et/ou de l'armature inférieure de parechocs ;
- une aile latérale 14 avant solidaire du support d'aile avant 12 et formant un élément de carrosserie du véhicule automobile ;
- un projecteur 11 comportant une source lumineuse et une optique de mise en forme de rayons lumineux produits par la source lumineuse, le projecteur 11 comportant des dispositifs de fixation 111A, 11B, 111C à l'armature supérieure de parechocs, à l'armature inférieure de parechocs et à l'aile latérale 14 avant.

Dans l'arrangement de façade 1 selon l'invention, le projecteur 11 comporte un organe de maintien 113 configuré pour collaborer par engagement de formes complémentaires avec un élément de maintien complémentaire 120 du support d'aile avant 12. Plus particulièrement, le boitier 112 du projecteur 11 comporte l'organe de maintien 113, tandis que l'élément de maintien complémentaire 120 s'étend depuis un bord avant 122 du support d'aile avant 12.

Les dispositifs de fixation 111A, 11B, 111Cs sont répartis au niveau des différents coins du boitier 112 :
- un premier dispositif de fixation 111A est situé au niveau d'un bord supérieur arrière du boitier 112 et du côté extérieur dudit boitier 112, le premier dispositif de fixation 111A formant une patte de fixation qui s'étend vers l'arrière en direction de l'aile latérale 14 ;
- un deuxième dispositif de fixation 111B est situé au niveau du bord supérieur arrière du boitier 112 et du côté intérieur dudit boitier 112, le deuxième dispositif de fixation 111B formant une patte de fixation qui s'étend vers l'arrière en direction de l'armature supérieure de parechocs, non représentée sur les FIGURES ;
- un troisième dispositif de fixation 111C est situé au niveau du bord inférieur arrière du boitier 112 et du côté intérieur dudit boitier 112, le troisième dispositif de fixation 111C formant une patte de fixation qui s'étend vers l'arrière en direction de l'armature inférieure de parechocs, non représentée sur les FIGURES.

L'organe de maintien 113 s'étend quant à lui en saillie depuis une face extérieure 114 du boitier 112, de sorte à se présenter en face du support d'aile avant 12, et en particulier en face de son bord avant 122.

L'organe de maintien 113 prend la forme d'une protrusion qui s'étend depuis la face extérieure 114 du boitier 112. La protrusion délimite une cavité 110 qui est ouverte vers l'arrière, c'est-à-dire du côté du support d'aile avant 12. La protrusion et la cavité 110 ont une forme parallélépipédique de sorte à pouvoir accueillir une extrémité terminale de l'élément de maintien complémentaire 120. En particulier, la cavité 110 est délimitée par des faces périphériques 116, 117 :
- une première face périphérique 116 formant une face périphérique supérieure de la cavité 110 ;
- une deuxième face périphérique 117 formant une face périphérique inférieure de la cavité 110.

La deuxième face périphérique 117 et la première face périphérique 116 s'étendent en regard l'une de l'autre. La première face périphérique 116 et la deuxième face périphérique 117 s'étendent de manière majoritairement plane et parallèle entre elles afin de faciliter l'insertion de l'élément de maintien complémentaire 120.

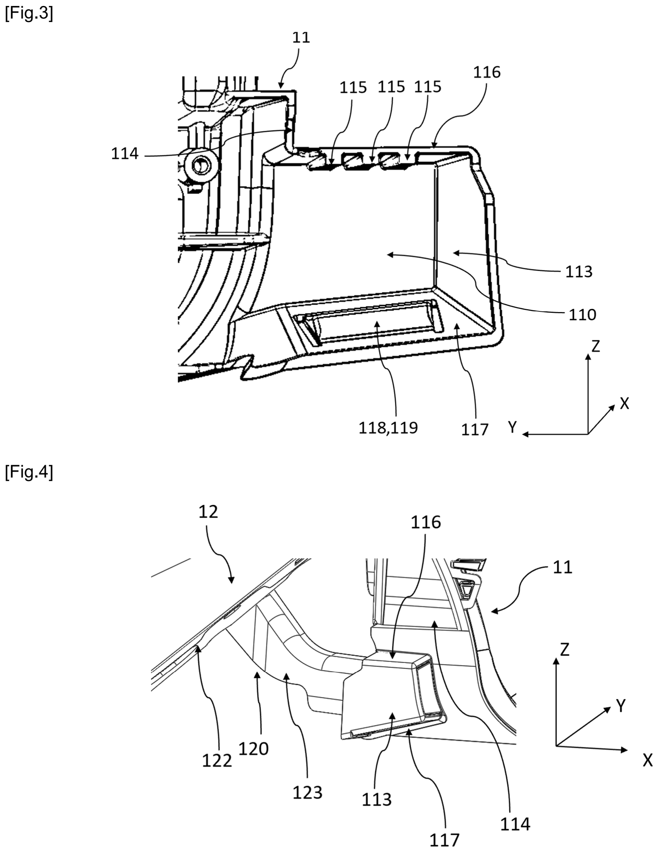

Complémentairement, comme visible sur les FIGURES 3, 5 et 6, la première face périphérique 116 comporte des nervures 115 qui s'étendent vers l'intérieur de la cavité 110. En particulier, les nervures 115 s'étendent longitudinalement depuis une ouverture de la cavité 110 - au niveau de sa face arrière, et en direction de l'avant. ces nervures 115 sont situées à l'aplomb de la deuxième face périphérique 117 et permettent de maintenir l'élément de maintien complémentaire 120 engagé dans la cavité 110.

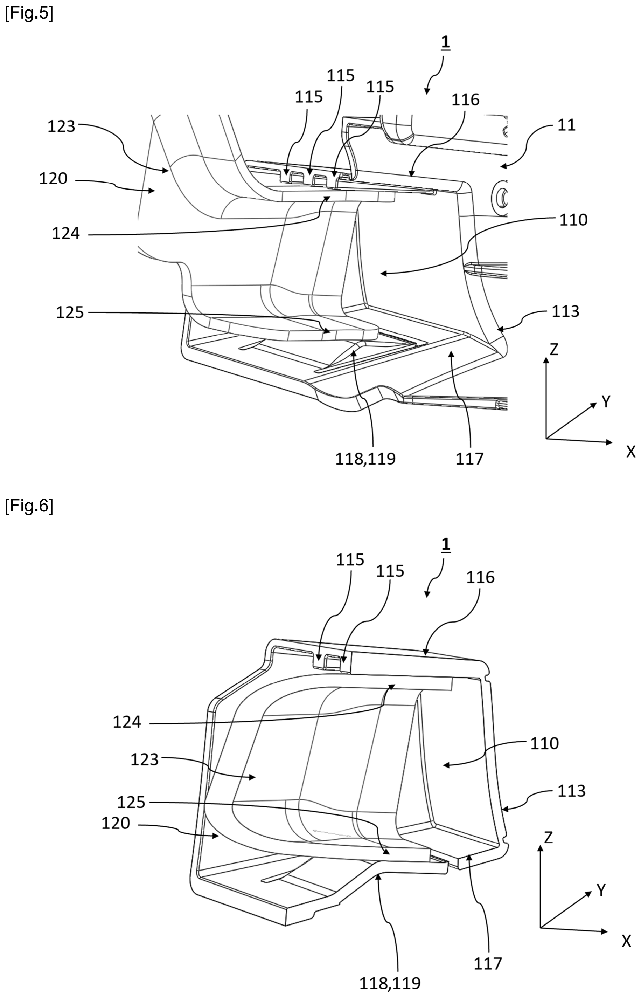

Complémentairement, la deuxième face périphérique 117 de la cavité 110 comporte une zone élastiquement déformable et formant une zone de clippage 118. La zone de clippage 118 est configurée pour générer un effort de retenue sur l'élément de maintien complémentaire 120 lorsque celui-ci est engagé dans la cavité 110, et comme visible sur les FIGURES 5 et 6.

A cet effet, la zone élastiquement déformable comporte une lèvre 119 pliée en direction de l'intérieur de la cavité 110. La zone clippage est obtenue par découpage de la lèvre 119 pliée à partir de la deuxième face périphérique 117 de la cavité 110. La lèvre 119 pliée présente ainsi un profil en « V » orienté vers l'intérieur de la cavité 110, de sorte que l'élément de maintien appuie sur la lèvre 119 pliée qui tend à se déformer en direction de la deuxième face périphérique 117 depuis laquelle elle est formée. En retour, la lèvre 119 pliée exerce sur l'élément de maintien complémentaire 120 un effort orienté vers l'intérieur de la cavité 110 et qui tend à plaquer l'élément de maintien complémentaire 120 contre la première face périphérique 116. Comme visible sur les FIGURE 5 et 6, les bords d'extrémité 124, 125 de la portée 123 formant l'élément de maintien complémentaire 120 prennent appui respectivement sur lèvre 119 formée depuis la deuxième face périphérique 117 et contre les nervures 115 de la première face périphérique 116.

En synthèse, l'invention concerne un arrangement de façade 1 pour véhicule automobile, l'ensemble de façade comportant un projecteur 11 comportant un boitier 112 logeant une source lumineuse et une optique de mise en forme de rayons lumineux produits par la source lumineuse, le projecteur 11 comportant des dispositifs de fixation 111A, 11B, 111C qui s'étendent en saillie depuis le boitier 112 et permettant son montage à une structure de caisse du véhicule automobile en trois points différents. Selon l'invention, le boitier 112 comporte un quatrième point de fixation formé par un organe de maintien 113 configuré pour collaborer par engagement de formes complémentaires avec un élément de maintien complémentaire 120 solidaire d'un support d'aile avant 12 du véhicule automobile.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux. ]

## Revendications

1. Arrangement de façade (1) pour véhicule automobile, l'ensemble de façade comportant :
- une armature supérieure de parechocs destinée à supporter une partie supérieure d'un parechocs avant du véhicule automobile ;
- une armature inférieure de parechocs destinée à supporter une partie inférieure du parechocs avant ;
- un support d'aile avant (12) qui s'étend depuis un bord latéral de l'armature supérieure de parechocs et/ou de l'armature inférieure de parechocs ;
- une aile latérale (14) avant solidaire du support d'aile avant (12) et formant un élément de carrosserie du véhicule automobile ;
- un projecteur (11) comportant une source lumineuse et une optique de mise en forme de rayons lumineux produits par la source lumineuse, le projecteur (11) comportant des dispositifs de fixation (111A, 11B, 111C) à l'armature supérieure de parechocs, à l'armature inférieure de parechocs et à l'aile latérale (14) avant ;
**caractérisé en ce que** le projecteur (11) comporte un organe de maintien (113) configuré pour collaborer par engagement de formes complémentaires avec un élément de maintien complémentaire (120) du support d'aile avant (12).

2. Arrangement de façade (1) selon la revendication précédente, dans lequel l'organe de maintien (113) s'étend depuis un bord latéral inférieur du projecteur (11).

3. Arrangement de façade (1) selon l'une quelconque des revendications précédentes, dans lequel l'organe de maintien (113) comporte une protrusion formant une cavité (110) creuse configurée pour recevoir au moins en partie l'élément de maintien complémentaire (120) du support d'aile avant (12).

4. Arrangement de façade (1) selon la revendication précédente, dans lequel la cavité (110) creuse est délimitée par des faces périphériques (116, 117) délimitant une cavité (110) de forme polygonale.

5. Arrangement de façade (1) selon la revendication précédente, dans lequel une première face périphérique (116) comporte des nervures (115) qui s'étendent transversalement ou longitudinalement par rapport à une direction d'élongation de la cavité (110).

6. Arrangement de façade (1) selon la revendication précédente, dans lequel une deuxième face périphérique (117) comporte une zone élastiquement déformable et formant une zone de clippage (118), ladite zone de clippage (118) étant configurée pour générer un effort de retenue sur l'élément de maintien complémentaire (120) dans la cavité (110).

7. Arrangement de façade (1) selon la revendication précédente, dans lequel la deuxième face périphérique (117) est située en regard de la première face périphérique (116).

8. Arrangement de façade (1) selon la revendication précédente, dans lequel les nervures (115) de la première face périphérique (116) s'étendent en regard de la zone de clippage (118) de la deuxième face périphérique (117).

9. Arrangement de façade (1) selon l'une quelconque des revendications précédentes, dans lequel l'élément de maintien complémentaire (120) s'étend depuis une partie inférieure d'un bord avant (122) du support d'aile avant (12).

10. Véhicule automobile comportant un arrangement de façade (1) selon l'une quelconque des revendications précédentes.
